(19) **Europäisches Patentamt**

**European Patent Office**

**Office européen des brevets**

(11) **EP 1 094 710 B1**

(12) **EUROPEAN PATENT SPECIFICATION**

(45) Date of publication and mention
of the grant of the patent:
**19.02.2003 Bulletin 2003/08**

(51) Int Cl.7: **A01N 63/00**
// (A01N63/00, 59:26),
A01N59:00

(21) Application number: **99932763.8**

(22) Date of filing: **01.07.1999**

(86) International application number:
**PCT/EP99/04524**

(87) International publication number:
**WO 00/001237 (13.01.2000 Gazette 2000/02)**

(54) **SPORICIDAL COMPOSITION**

SPORIZIDE ZUSAMMENSETZUNG

COMPOSITION SPORICIDE

(84) Designated Contracting States:
**AT BE CH CY DE DK ES FI FR GB GR IE IT LI LU MC NL PT SE**

(30) Priority: **06.07.1998 GB 9814547**

(43) Date of publication of application:
**02.05.2001 Bulletin 2001/18**

(73) Proprietor: **Basf Aktiengesellschaft
67061 Ludwigshafen (DE)**

(72) Inventor: **ASHWORTH, David W.
Ruddington, Nottingham NG11 6JS (GB)**

(74) Representative: **Goldscheid, Bettina et al
BASF Aktiengesellschaft,
Patentabteilung ZDX - C6Y
67056 Ludwigshafen (DE)**

(56) References cited:
**EP-A- 0 307 376          WO-A-91/11105
US-A- 4 937 072**

## Description

The present invention relates to sporicidal compositions comprising iodide and thiocyanate anions, lactoperoxidase and a peroxide.

There are several sporicidal compositions which are commonly used. These include glutaraldehyde and peracetic acid. US4,937,072 discloses a sporicidal composition which comprises a peroxide generating material, a peroxidase and an iodide salt.

However, all of the above compositions have drawbacks either in terms of speed of action or duration of action. The search continues for improved sporicidal compositions which kill spores rapidly and also have a long duration of action.

EP307376 (EWOS AG) discloses a short-term microbiocidal composition comprising iodide and lactoperoxidase and/or horseradish peroxidase, together with a hydrogen peroxide donor. Optionally, the peroxide donor may be the combination of glucose and glucose oxidase, but it may also be inter alia magnesium peroxide or carbamide peroxide. When glucose oxidase is included it is present at levels of no more than about 100 U/l. The compositions are only shown to be effective against bacteria and are stated to be active for about 24 hours in open air. It is disclosed that thiocyanate can be added to the composition but it is stated that this should not be used at concentrations higher than 10 ppm as the activity of the compositions is reduced. Two comparative examples (examples 5 and 6) are disclosed which have 40 ppm of thiocyanate, 100 ppm of iodide and 100 U/l of glucose oxidase but these do not have satisfactory anti-microbial activity. There is no mention of sporicidal activity in this document.

EP514417B (The Boots Company PLC) discloses anti-microbial compositions iodide anions and thiocyanate anions in a weight : weight ratio of from 0.1:1 to 50:1 and having a combined anion weight concentration of at least 5 mg/kg, D-glucose in a weight concentration of at least 0.2 g/kg and an effective amount of the oxidoreductase enzyme glucose oxidase. There is no disclosure of activity against bacterial spores in this document.

WO95/26137 discloses a method of killing microorganisms with an improved speed of kill by mixing effective amounts of D-glucose and glucose oxidase, incubating the resulting mixture which comprises both iodide ions and thiocyanate ions wherein the weight ratio of iodide ions to thiocyanate ions is from 0.1:1 to 50:1 and the combined anion weight concentration is at least 5 mg/kg wherein the concentration of glucose oxidase in the resulting mixture is at least 150 U/kg, at a temperature of from -10 to 50°C and at a pH of from 1-8 for a period of from 30 minutes to 48 hours and then applying the incubated mixture to the microorganisms to be killed. There is no disclosure of activity against bacterial spores in this document.

WO98/49272 discloses a stabilised aqueous enzyme concentrate composition which comprises: a) 1000 to 1800 units/ml of lactoperoxidase: b)1500 to 2750 units/ml of glucose oxidase; c) 10 to 20% w/v of an alkali metal halide salt; and d) a chelating buffering agent present in an amount such that the pH of the composition is in the range of 5.5 to 6.5. There is no disclosure of activity against bacterial spores in this document.

Surprisingly a sporicidal composition has been found which combines rapid killing with a longer duration of action than known compositions.

The present invention provides a sporicidal composition comprising:

a) iodide anions and thiocyanate anions in a weight : weight ratio within the range 0.1:1 to 50:1 and having a combined anion weight concentration of at least 11.2 mg/kg provided that the composition comprises at least 10.1 mg/kg of thiocyanate anions

b) a peroxidase in a weight concentration in the range of 1 to 10 mg/kg, and

c) a non-enzymic peroxide donor in a weight concentration in the range of 0.5 to 100g/kg.

It will be understood that the compositions will be made up to 100% by weight with water or another suitable carrier.

Both iodide and thiocyanate anions have been found to be essential components of the compositions according to the invention. Iodide and thiocyanate anions are generally included in the compositions according to the invention in the form of salts. Suitable iodide salts include alkali metal salts such as potassium iodide and sodium iodide and mixtures thereof. Suitable thiocyanate salts include, for example, potassium, sodium, ammonium, ferric and cuprous salts of thiocyanate and mixtures thereof. Preferably the weight concentration of iodide anions is at least 5 mg/kg and the weight concentration of thiocyanate anions is at least 12 mg/kg. The weight:weight ratio of iodide:thiocyanate anions is preferably in the range 0.2:1 to 20:1, more preferably 0.5:1 to 15:1, particularly 1:1 to 5:1, and the combined anion weight concentration is preferably at least 15 mg/kg.

The peroxidase is selected from lactoperoxidase, myeloperoxidase, horseradish peroxidase or other suitable peroxidase. Lactoperoxidase is particularly preferred. Lactoperoxidase is classified as E.C.1.17.1.7 (IUPAC) and is defined herein in International Units (amount of enzyme required to catalyse the reduction of 1.0 micromole $H_2O_2$ per minute at pH 7.0 and 25°C). Lactoperoxidase is available commercially from a number of sources, for example from DMV International (200U/mg). It may be supplied, for example, in the form of a freeze-dried powder or in an aqueous salt solution e.g. 1.8% NaCl or 12% NaCl.

All units (U) of enzyme activity referred to herein relate to International Units of activity defined as the amount of enzyme required to catalyse the transformation of 1.0 micromole of substrate per minute at 25°C under optimal conditions. All concentrations referred to herein relate to amounts per kg/litre of the components at the final use concentration .

The compositions of the present invention comprise preferably from 10U to 10000U per kg/litre, more preferably from 400U to 4000U per kg/litre of lactoperoxidase

Suitably the non-enzymic peroxide peroxide donor is hydrogen peroxide or compounds which produce hydrogen peroxide in aqueous solution for example metal peroxides, percarbonates , perborates, persulphates , perphosphates and peroxyacids. Preferably the non-enzymic peroxide donor is hydrogen peroxide.

The compositions of the present invention comprise preferably from 1.0 to 100g/kg, for example 0.5g to 50g/kg e.g. 4 to 16g/kg, more preferably from 1g to 10g/kg and most preferably from 0.6 to 1.2g/kg of peroxide donor.

The sporicidal compositions of the present invention may provide the active component of a wide variety of products which require potent sporicidal activity. Examples of such products include :

a) deodorants e.g. for topical administration in the form of roll-on or stick formulations;

b) antibacterial skin washes e.g. in the form of lotions;

c) anti-acne preparations e.g. in the form of lotions or creams;

d) anti-athletes foot preparations e.g. in the form of lotions;

e) anti-dandruff preparations e.g. in the form of shampoos or lotions;

f) dental preparations e.g. mouth washes suitable for general oral hygiene and in particular having anti-plaque properties, and dentifrices such as toothpastes, toothpowders, chewing gums and lozenges;

g) impregnated materials e.g. wound dressings, sutures and dental floss;

h) pharmaceuticals e.g. wound irrigants and bum treatments, anti-diarrhoeal agents and medicaments suitable for the treatment of infections such as Candida and Tinea infections;

i) ophthalmic preparations e.g. eye washes and solutions for rinsing and/or sterilising contact lenses; and

j) sterilants e.g. for baby bottles,surgical or dental instruments and medical devices

k) disinfectants for the control of surface contamination

l) disinfection of prepared foods

m) post harvest treatment of food crops

n) treatment of potable fluids for example water

o) disinfection of laundry

p) disinfection of solutions and materials for use in the electrochemical industry

q) disinfectant wipes

r) sanitising solutions for use in transportable toilets.

The use of the sporicidal compositions according to the invention in the disinfection of surgical instruments and other medical devices is particularly advantageous. Broad spectrum sporicidal activity is an essential requirement of such products, since specificity for a particular group of microorganisms may allow other opportunistic spores to flourish giving rise to severe infections with one or more specific types of spore.

A typical composition for "active" use according to the invention comprises:

A) 10 to 500 mg/kg, preferably 25 to 300 mg/kg iodide anions;

B) 15 to 200 mg/kg, preferably 20 to 150 mg/kg thiocyanate anions;

C) lactoperoxidase in a weight concentration in the range of 1 to 10mg/kg and

D) hydrogen peroxide in a weight concentration in the range of 1g/kg to 10 g/kg

wherein the weight:weight ratio of iodide:thiocyanate anions is 0.2:1 to 20:1, preferably 0.5:1 to 15:1, more preferably 1:1 to 5:1, and the combined anion weight concentration is at least 25 mg/kg, preferably 25 to 500 mg/kg, in combination with a suitable carrier or excipient.

The compositions of the invention may, if desired, incorporate further agents which may supplement or enhance the sporicidal activity thereof, for example other enzymes such as lactoferrin or salts such as calcium chloride. Preferably lactoferrin is used at a concentration in the range of 0.01 to 10% by weight of the composition and more preferably in the range of 1 to 5 %.

Sporicidal activity may be enhanced by the addition of agents having antioxidant activity. Typical antioxidants include, for example, butylated hydroxyanisole, butylated hydroxytoluene, $\alpha$-tocopherol and esters thereof, ascorbic acid, salts and esters thereof, gallic acid, salts and esters thereof e.g. propyl gallate, quinones such as 2,5-ditertiary butylhydroquinone, propolis, flavenoid-containing materials such as quercetin, sulphur-containing materials such as dilauryl-3,3-thiodipropionate and distearyl-3,3-thiodipropionate, and mixtures thereof. Preferred antioxidants are selected from butylated hydroxyanisole, butylated hydroxytoluene, $\alpha$-tocopherol and esters thereof and ascorbic acid, salts and esters thereof, preferably in a weight concentration of at least 1 mg/kg, more preferably at least 50 mg/kg. The use of $\alpha$-tocopherol and esters thereof as "natural" antioxidants is particularly preferred.

The compositions of the invention may further comprise one or more chelating agents for example ethylenediaminetetra(methylenephosphonic) acid (EDTMP) or diethylenetriaminepenta(methylenephosphonic) acid (DTPMP). These chelating agents are believed to sequester metal ions such as iron, copper and manganeseions which are known to accelerate the decomposition of hydrogen peroxide.

Suitably the pH of the composition is in the range of to 10. Preferably the pH is in the range of 2 to 9 and more preferably the pH is in the range of 3 to 8. The pH of the composition may be maintained at the desired pH by the addition of a suitable buffer as known to those skilled in the art.

It will be understood that the compositions according to the invention as described hereinbefore may be provided in a suitable concentrated form for active use. Accordingly, the concentrated compositions may comprise components A : B : C: D in the relative ratios per kg or litre of the concentrate

(A) 0.75 to 9g iodide anions:
(B) 0.3 to 4.5g thiocyanate anions:
(C) 0.03 to 0.3g of lactoperoxidase:
(D) 30 to 300g of a non-enzymic peroxide donor.

In another aspect the present invention provides a sporicidal composition in concentrated and substantially non-reacting form comprising a kit of ingredients wherein the peroxide donor is kept separate from a mixture of the iodide and thiocyanate anions and the lactoperoxidase and then is mixed in prior to use.

There is also provided apparatus in the form of a packaged chemical composition for use in the method defined above, said apparatus comprising:

a) a first reservoir comprising a first solution of iodide anions, thiocyanate apions and lactoperoxidase;
b) a second reservoir comprising a second solution of a peroxide donor;
c) an incubation chamber connected to said first and second reservoirs; and
d) means for introducing controlled quantities of said first and second solutions into said incubation chamber to prepare and incubate a sporicidal composition ready for use.

An example of packaging suitable for use in the method of the present invention will now be described, by way of example only, with reference to the accompanying drawings, in which:

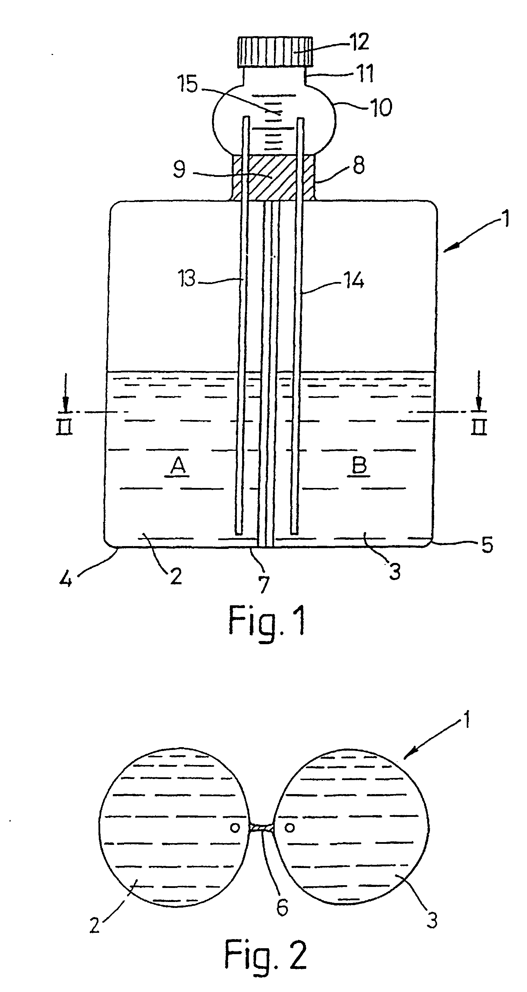

Figure 1 shows a side section view of a packaged chemical composition according to the present invention, along the line I-I of Figure 2; and

Figure 2 shows a plan section view of the packaged chemical composition of Figure 1 along the line II-II of Figure 1.

The packaged sporicidal composition, generally indicated as 1, comprises a first reservoir 2 and a second reservoir 3. The reservoirs are of approximately equal size and are generally tubular in shape. The reservoir walls 4,5 are made from resilient polyethylene but it will be appreciated that other resilient materials, such as polyvinylchloride (PVC) or polyethyleneterephthalate (PET) may also be used if desired. The walls are strong enough to avoid the risk of breakage but flexible enough to permit "squeezing" of the contents in use.

One of the reservoirs, 2, houses a first solution as described above and the other reservoir, 3, houses the second solution as described above. The reservoirs 2,3 are substantially sealed so that no leakage of contents can occur from one to the other. For convenience they are welded together at one point by a polythene web 6 which is continuous with the reservoir walls 4,5. The walls of the reservoirs are independently deformable such that it is possible to deform one reservoir, for example by "squeezing", without deforming the other, if desired.

The lower end of the reservoirs provide a base 7 to allow the packaging to be rested in an upright position. The upper ends of the reservoirs 2,3 are constricted to form a neck 8 which is blocked by a neck-piece 9 made of stiff non-resilient polyethylene. The neck 8 and neck-piece 9 support a bulbous incubation chamber 10. The incubation chamber 10 is constricted at its upper end to provide a second neck 11 which is threaded in the manner of a screw-top bottle neck to connect with a screw-cap 12 which may be used to close off the packaging when not in use.

Polythene tubes 13,14 extend substantially from the bases of the two reservoirs 2,3 respectively, through holes in the neck-piece 9, with which they form an interference fit, to the base of the incubation chamber 10. The tubes 13,14 are narrow enough to prevent significant leakage of the contents of the reservoirs 2,3 into the incubation chamber 10 during normal storage. Such leakage as may occur is contained by the cap 12. However, when the cap 12 is removed and one or both of the reservoir walls is deformed, for example by "squeezing", a portion of the reservoir contents is forced up the tube 13 or 14 by the pressure created and into the incubation chamber 10.

In use, controlled mixing of the reservoir contents (the solutions described above) is achieved by squeezing each of the reservoirs in turn and/or simultaneously by roughly equal amounts to introduce equal quantities of the reservoir solutions into the incubation chamber 10. Indicia 15 are provided on the walls of the incubation chamber 10 to assist in measuring the quantities to be mixed. The walls of the incubation chamber are made from transport/translucent polyethylene to assist in the measuring process but this is not essential and it will be appreciated that opaque plastics materials may be used if desired. The cap 12 may then be replaced and the apparatus 1 may be shaken gently to complete the mixing process. The resulting mixture is used directly or is left to incubate for the desired period, typically from 5 to 10 minutes.

After incubation the cap 12 is removed and the incubated sporicidal mixture is used in the desired manner.

Where the components are not mixed in equal proportions the reservoirs may be made of correspondingly unequal size and corresponding modifications may be made to the other parts of the apparatus as appropriate. Thus, if four parts of the first solution are needed to each part of the second solution, then the reservoir housing the first soluiton may be squeezed four times as often as the reservoir housing the second solution, until the desired quantity of mixture has been generated in the incubation chamber 10. Alternatively or additionally, the indicia 15 may be used to measure the required proportions.

Instructions for mixing the components in the appropriate proportions will normally be supplied with the apparatus, preferably by printing onto the packaging itself.

In a broader aspect the present invention also comprises the use of compositions as herein described as sporicidal compositions. In a further aspect the present invention provides a method of killing spores comprising exposing the spores to the compositions of the present invention.

EXAMPLES

Example 1 (LPS-HP8000)

Tri-sodium citrate (44.12g ) was dissolved in distilled water (900ml) and adjusted to pH 5 by adding citric acid with stirring. The volume was made up to 1.5 litres with distilled water.

The weight of Lactoperoxidase required was calculated using an assay result (performed as described in WO 98/49272) for the activity of the enzyme (expressed as units / mg) using the following formula:

$$\text{weight required (mg)} = \frac{750}{\text{enzyme activity}}$$

The required amount of Lactoperoxidase was added to buffer (900 ml) whilst stirring. The mixture was stirred for 15 mins. Potassium iodide solution [10 ml of a solution prepared by dissolving potassium iodide (0.73 g) in citrate buffer (100 ml)] and sodium thiocyanate solution [10 ml of a solution prepared by dissolving sodium thiocyanate (0.47 g) in citrate buffer (100 ml)] were added and the mixture was stirred for 2 mins. Hydrogen peroxide solution (26.67 ml of 30 % solution) was added and the solution was made up to 1 litre using citrate buffer. The solution was stirred for 5 mins and the pH adjusted with citric acid if necessary. The mixture was stored in a polypropylene container at room temperature.

Test Procedure to Compare Example 1 with hydrogen peroxide solutions of differing levels

The *B. subtilis* spore suspension was prepared by centrifugal washing of a one-week-old culture and dilution to McFarland 2 to give approx. $10^7 - 10^8$ cfu/ml. The solution of Example 1 and hydrogen peroxide solutions (0.8%, 1%, 2% and 4%) were prepared 1 day prior to the kill test.

The kill test was carried out as follows: duplicate 10 ml volumes of each solution (and sterile distilled water controls) were inoculated with 0.1 ml of the spore suspension. At contact times of 0, 3 and 5 hours, 1 ml was taken into 9 ml letheen broth and from this duplicate 0.1 ml volumes into 1 ml general purpose media (GPM+) in Bactometer** wells. The test samples were incubated for 24 hours at 37 °C in the Bactometer. Further controls were also run with duplicate 10 mls sterile distilled water inoculated with 0.1 ml of a 1/100 dilution of the spore suspension ($10^5$ -$10^6$ cfu/ml).

** The bioMerieux Vitek Bactometer uses electrical signals (in this case impedance) to rapidly detect the presence of microorganisms.

Results

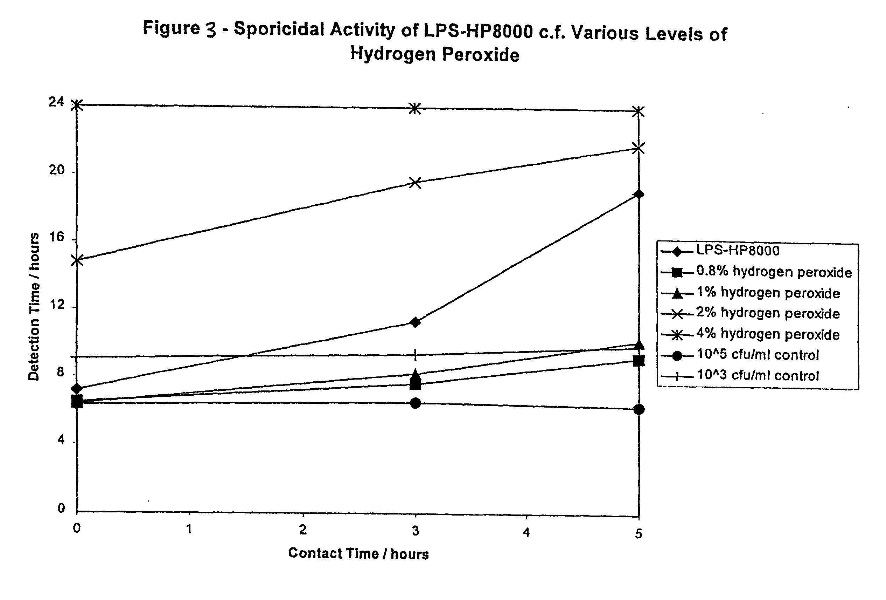

The results are presented in chart form (Figure 3) as mean detection times for each solution. The greater the detection time, the lower the numbers of spores. It is highly likely that detection times greater than 24 hours constitute total kill (or total inhibition with very few viable spores remaining)

The 4% w/w hydrogen peroxide solution gave total kill immediately. With 5 hours contact time, both Example 1 and the 2% w/w hydrogen peroxide solutions demonstrated almost total kill, with detection times of 19.1 and 21.9 hours respectively. In this time the 0.8 % w/w and 1% w/w hydrogen peroxide solutions had demonstrated only a 2 - 3 log reduction (approximation based on the controls). These results demonstrate that the addition of Lactoperoxidase, thiocyanate and iodide to a hydrogen peroxide solution enhances the activity. Over a 5 hour period, the Lactoperoxidase system containing 8000 ppm (0.8 % w/w) $H_2O_2$ showed greater activity than a 1% w/w $H_2O_2$ solution and, by 5 hours, had demonstrated almost comparable kill to a 2% w/w $H_2O_2$ solution (see Figure 3).

Example 2

Examples of a suitable concentrated composition of the present invention are given below in terms of grams of each component per kg or litre of final concentrate depending on the nature of the formulation:-

| Hydrogen Peroxide | 200g |
|---|---|
| Lactoperoxidase | 0.25g |
| Sodium Thiocyanate | 2.1g |
| Potassium Iodide | 3.3g |

This concentrate was diluted prior to use in the ratio of one part of concentrate to 500 parts water to achieve the final active sporicidal composition.

The anti-microbial activity of particular compositions according to the present invention has been demonstrated as follows: A 10 ml aliquot of the composition was inoculated with 100 $\mu$l of 1 x 10$^9$ of a Bacillus subtilis (NCTC 10073) spore suspension. A 1 ml aliquot of inoculated composition was removed at times 0, 5 and 24 hours and placed into Letheen Broth. A 0.1 ml aliquot of this inoculated Letheen Broth was removed into GMP+ media and placed in a Bactometer for detection of survivors. Log Survivors can be expressed in terms of detection time. The time taken for detection to occur was noted. Detection times between compositions and relevant controls were compared.

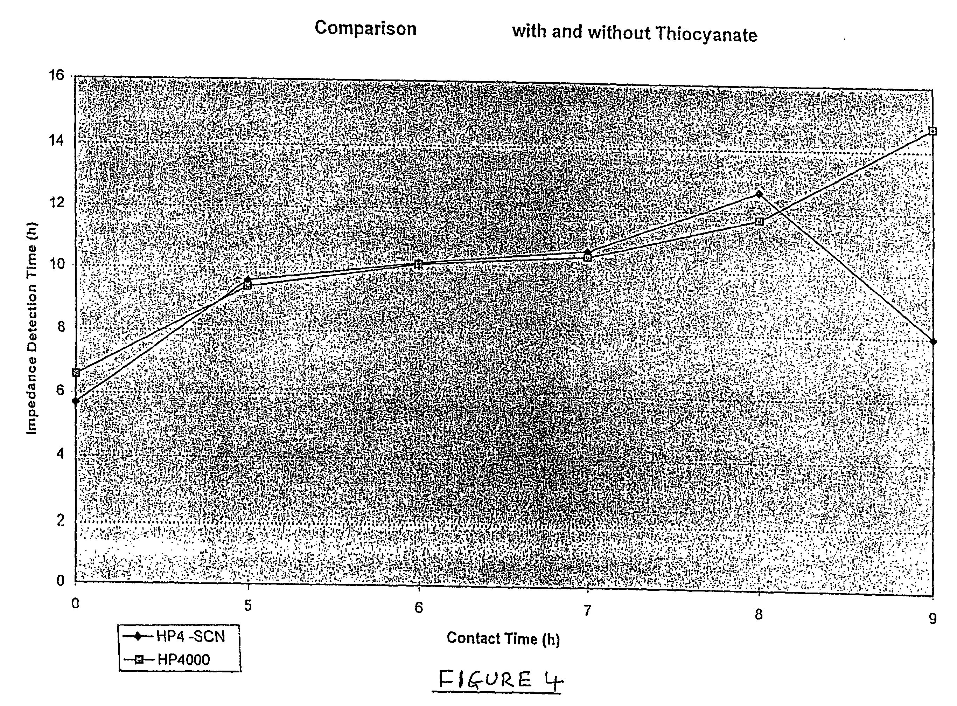

The results are shown in figure 4. The plot shows the results of a composition with thiocyanate (HP4000) and without thiocyanate ( HP4 -SCN ). These results demonstrate the longer duration of action against spores of the composition which contains thiocyanate.

**Claims**

1. A sporicidal composition comprising:

   a) iodide anions and thiocyanate anions in a weight : weight ratio within the range 0.1:1 to 50:1 and having a combined anion weight concentration of at least 11.2 mg/kg provided that the composition comprises at least 10.1 mg/kg of thiocyanate anions

   b) a peroxidase in a weight concentration in the range of 1 to 10 mg/kg, and

   c) a non-enzymic peroxide donor in a weight concentration in the range of 0.5 to 100g/kg.

2. A composition according to claim 1 wherein the peroxidase is lactoperoxidase.

3. A composition according to claim 1 wherein the peroxide donor is hydrogen peroxide .

4. A composition as claimed in any one of the preceding claims wherein the sporicidal composition weight concentration of iodide anions is at least 5 mg/kg and the weight concentration of thiocyanate anions is at least 12 mg/kg.

5. A composition as claimed in any one of the preceding claims in which the weight:weight ratio of iodide: thiocyanate anions is 0.2:1 to 20:1.

6. A sporicidal composition according to claim 1 comprising:

   (A) 25 to 300mg/kg iodide anions;

   (B) 20 to 150mg/kg thiocyanate anions;

   (C) 1 to 10mg/kg of lactoperoxidase

   (D) 1 to 10g/kg of hydrogen peroxide such that the weight:weight ratio of iodide:thiocyanate anions is 0.1:1 to 50:1 and the combined anion weight concentration is at least 15 mg/kg, in combination with a suitable carrier or excipient.

7. A composition as claimed in claim 6 in which the weight:weight ratio of iodide: thiocyanate anions is 0.2:1 to 20:1.

8. A composition as claimed in claim 7 in which the combined anion weight concentration is 25 to 200 mg/kg.

9. A method of using a composition as claimed in any one of claims 2 to 8 in concentrated and substantially non-reacting form comprising a kit of ingredients wherein the peroxide donor is kept separate from a mixture of the iodide and thiocyanate anions and the lactoperoxidase and is mixed in prior to use.

10. A method of killing spores comprising exposing the spores to the compositions as claimed in any one of claims 1 to 8 .

11. The use compositions as claimed in any one of claims 1 to 8 in the disinfection of surgical instruments and other medical devices.

12. Apparatus in the form of packaged chemical composition for use in the method according to claim 9 comprising:

   a) a first reservoir comprising a first solution of iodide anions, thiocyanate anions and lactoperoxidase;
   b) a second reservoir comprising a second solution of a peroxide donor;
   c) an incubation chamber connected to said first and second reservoirs; and

d) means for introducing controlled quantities of said first and second solutions into said incubation chamber to prepare and incubate a sporicidal composition ready for use.

**Patentansprüche**

1. Sporizide Zusammensetzung mit:

   a) Iodidanionen und Thiocyanatanionen in einem Gewichtsverhältnis im Bereich von 0,1:1 bis 50:1 und mit einer Anionengesamtgewichtskonzentration von mindestens 11,2 mg/kg, mit der Maßgabe, daß die Zusammensetzung mindestens 10,1 mg/kg Thiocyanatanionen enthält,

   b) einer Peroxidase in einer Gewichtskonzentration im Bereich von 1 bis 10 mg/kg, sowie

   c) einem nicht enzymartigen Peroxiddonator in einer Gewichtskonzentration im Bereich von 0,5 bis 100 g/kg.

2. Zusammensetzung nach Anspruch 1, wobei es sich bei der Peroxidase um Lactoperoxidase handelt.

3. Zusammensetzung nach Anspruch 1, wobei es sich bei dem Peroxiddonator um Wasserstoffperoxid handelt.

4. Zusammensetzung nach einem der vorhergehenden Ansprüche, wobei die Iodidanionengewichtskonzentration der sporiziden Zusammensetzung mindestens 5 mg/kg und die Thiocyanatanionengewichtskonzentration mindestens 12 mg/kg beträgt.

5. Zusammensetzung nach einem der vorhergehenden Ansprüche, in der das Gewichtsverhältnis zwischen Iodidanionen und Thiocyanatanionen 0,2:1 bis 20:1 beträgt.

6. Sporizide Zusammensetzung nach Anspruch 1 mit:

   (A) 25 bis 300 mg/kg Iodidanionen;

   (B) 20 bis 150 mg/kg Thiocyanatanionen;

   (C) 1 bis 10 mg/kg Lactoperoxidase;

   (D) 1 bis 10 g/kg Wasserstoffperoxid,

   so daß das Gewichtsverhältnis zwischen Iodidanionen und Thiocyanatanionen 0,1:1 bis 50:1 und die Anionengesamtgewichtskonzentration mindestens 15 mg/kg beträgt, in Kombination mit einem geeigneten Träger oder Grundstoff.

7. Zusammensetzung nach Anspruch 6, in der das Gewichtsverhältnis zwischen Iodidanionen und Thiocyanatanionen 0,2:1 bis 20:1 beträgt.

8. Zusammensetzung nach Anspruch 7, in der die Anionengesamtgewichtskonzentration 25 bis 200 mg/kg beträgt.

9. Verfahren zur Verwendung einer Zusammensetzung nach einem der Ansprüche 2 bis 8 in konzentrierter und im wesentlichen nicht reaktionsfähiger Form, umfassend ein Kit aus Bestandteilen, in dem der Peroxiddonator getrennt von einer Mischung der Iodid- und Thiocyanatanionen und der Lactoperoxidase aufbewahrt wird und vor der Verwendung eingemischt wird.

10. Verfahren zum Abtöten von Sporen, bei dem man die Sporen mit den Zusammensetzungen nach einem der Ansprüche 1 bis 8 behandelt.

11. Verwendung von Zusammensetzungen nach einem der Ansprüche 1 bis 8 bei der Desinfektion von chirurgischen Instrumenten und sonstigen medizinischen Geräten.

12. Vorrichtung in Form einer verpackten Chemikalienzusammensetzung für das Verfahren nach Anspruch 9 mit:

    a) einem ersten Vorratsbehälter mit einer ersten Lösung von Iodidanionen, Thiocyanatanionen und Lactoperoxidase;

    b) einem zweiten Vorratsbehälter mit einer zweiten Lösung eines Peroxiddonators;

    c) einer mit dem ersten und dem zweiten Vorratsbehälter in Verbindung stehenden Inkubationskammer; sowie

    d) einem Element zur Einbringung bestimmter Mengen der ersten und der zweiten Lösung in die Inkubationskammer zur Herstellung und Inkubation einer gebrauchsfertigen sporiziden Zusammensetzung.

**Revendications**

1. Composition sporicide comprenant :

   a) des anions iodure et des anions thiocyanate dans un rapport poids:poids dans la gamme de 0,1:1 à 50:1 et ayant une concentration pondérale d'anions combinés d'au moins 11,2 mg/kg, à condition que la composition comprenne au moins 10,1 mg/kg d'anions thiocyanate ;

b) une peroxydase dans une concentration pondérale dans la gamme de 1 à 10 mg/kg ; et

c) un donneur de peroxyde non enzymatique dans une concentration pondérale dans la gamme de 0,5 à 100 g/kg.

2. Composition selon la revendication 1, dans laquelle la peroxydase est la lactoperoxydase.

3. Composition selon la revendication 1, dans laquelle le donneur de peroxyde est le peroxyde d'hydrogène.

4. Composition selon l'une quelconque des revendications précédentes, dans laquelle la concentration pondérale de la composition sporicide en anions iodure est d'au moins 5 mg/kg et la concentration pondérale en anions thiocyanate est d'au moins 12 mg/kg.

5. Composition selon l'une quelconque des revendications précédentes, dans laquelle le rapport poids:poids des anions iodure:thiocyanate va de 0,2:1 à 20:1.

6. Composition sporicide selon la revendication 1, comprenant :

   (A) 25 à 300 mg/kg d'anions iodure ;
   (B) 20 à 150 mg/kg d'anions thiocyanate ;
   (C) 1 à 10 mg/kg de lactoperoxydase ;
   (D) 1 à 10 g/kg de peroxyde d'hydrogène ;

   de sorte que le rapport poids:poids des anions iodure: thiocyanate va de 0,1:1 à 50:1 et la concentration pondérale des anions combinés est d'au moins 15 mg/kg, en combinaison avec un véhicule ou un excipient approprié.

7. Composition selon la revendication 6, dans laquelle le rapport poids:poids des anions iodure:thiocyanate va de 0,2:1 à 20:1.

8. Composition selon la revendication 7, dans laquelle la concentration pondérale des anions combinés est comprise entre 25 et 200 mg/kg.

9. Procédé pour utiliser une composition selon l'une quelconque des revendications 2 à 8, sous forme concentrée et n'ayant sensiblement pas réagi comprenant une trousse d'ingrédients, où le donneur de peroxyde est maintenu séparé d'un mélange des anions iodure et thiocyanate et de la lactoperoxydase et dans lequel il est mélangé avant utilisation.

10. Procédé pour tuer des spores consistant à exposer les spores aux compositions selon l'une quelconque des revendications 1 à 8.

11. Compositions utilisées selon l'une quelconque des revendications 1 à 8, dans la désinfection d'instruments chirurgicaux et d'autres dispositifs médicaux.

12. Appareil sous forme de composition chimique prêt à l'emploi, pour une utilisation dans le procédé selon la revendication 9, comprenant :

   a) un premier réservoir comprenant une première solution d'anions iodure, d'anions thiocyanate et de lactoperoxydase ;
   b) un deuxième réservoir comprenant une deuxième solution d'un donneur de peroxyde ;
   c) une chambre d'incubation connectée auxdits premier et deuxième réservoirs ; et
   d) un moyen pour introduire des quantités maîtrisées desdites première et deuxième solutions dans ladite chambre d'incubation, pour préparer et incuber une composition sporicide prête à l'emploi.

Fig. 1

Fig. 2

Figure 3 - Sporicidal Activity of LPS-HP8000 c.f. Various Levels of Hydrogen Peroxide

EP 1 094 710 B1

**Comparison** **with and without Thiocyanate**

FIGURE 4

EP 1 094 710 B1